# EUROPEAN PATENT SPECIFICATION

(11) **EP 0 481 933 B1**
(45) Date of publication and mention of the grant of the patent: **09.08.1995**
(21) Application number: 91830437.9
(22) Date of filing: 15.10.1991
(51) Int. Cl.: H02P 6/00

(54) **A control circuit for a brushless electric motor with n phases**
Regelkreis für einen bürstenlosen elektrischen Motor mit n-Phasen
Circuit de régulation pour un moteur sans balais avec n phases

(30) Priority: 18.10.1990 IT 6780190
(43) Date of publication of application: 22.04.1992
(73) Proprietor: INDUSTRIE MAGNETI MARELLI S.p.A., 20145 Milano (IT)
(72) Inventor: De Filippis, Pietro, I-20128 Milano (IT)
(74) Representative: Quinterno, Giuseppe

(56) References cited:
- EP-A- 0 267 283
- EP-A- 0 316 716
- US-A- 4 262 237
- PATENT ABSTRACTS OF JAPAN, vol. 7, no. 17 (E-154)[1162], 22nd January 1983;& JP-A-57 173 385 (HITACHI SEISAKUSHO K.K.) 25-10-1982
- PATENT ABSTRACTS OF JAPAN, vol. 5, no. 103 (E-64)[775], 3rd July 1981;& JP-A-56 046 680 (YOSHIDA SEISAKUSHO K.K.) 27-04-1981

## Description

The present invention relates to a control circuit for a brushless electric motor which does not have sensors for detecting the angular position of its rotor.

More specifically, the subject of the invention is a control circuit for a brushless electric motor with n phases in which a controlled electronic switch is associated with each phase according to claim 1.

Brushless motors which do not have sensors (typically Hall-effect sensors) for detecting the angular positions of their rotors are used in numerous applications. In such applications, the electronics for controlling the brushless motor obtain data relating to the angular position of the rotor by observing the waveforms of the electromotive forces which develop at the terminals of each phase of the motor. However, this is possible only in dynamic conditions, that is, whilst the rotor is in motion.

When the motor has to be started from rest, the piloting electronics have no data on the basis of which they can correctly pilot the electronic switches associated with the individual phases since no electromotive forces are being induced in the phases. In order to solve this problem, the brushless motor is usually started in the same manner as a stepper motor, that is, it is piloted at a variable frequency which initially is low enough to enable the motor to cope with the inertial load of the rotor without losing pace and is then increased gradually to a frequency corresponding to a speed at which the electromotive forces induced reach a level such that the initial or starting circuit can be deactivated and the dynamic control circuit can be activated. The dynamic control circuit then controls the motor on the basis of the electromotive forces detected in the phases and in dependence on an external control signal which expresses the required speed or torque of the motor (see EP-A-267 283).

The object of the present invention is to provide a control circuit for a brushless electric motor without sensors for detecting the position of the rotor, which can be produced more simply and cheaply and which gives a better performance than prior-art circuits both in terms of the time needed to start the motor and in terms of current consumption.

Further characteristics and advantages of the invention will become clear from the detailed description which follows with reference to the appended drawings, provided purely by way of non-limiting example, in which:
Figure 1 is a circuit diagram, partially in block form, of a control circuit for a brushless electric motor according to the invention,
Figure 2 is a detailed circuit diagram of an embodiment of the starting circuit included in the control circuit of Figure 1, and
Figure 3 is a series of graphs showing the curves of some signals generated by the control circuit according to the invention, as functions of the time shown on the abscissa.

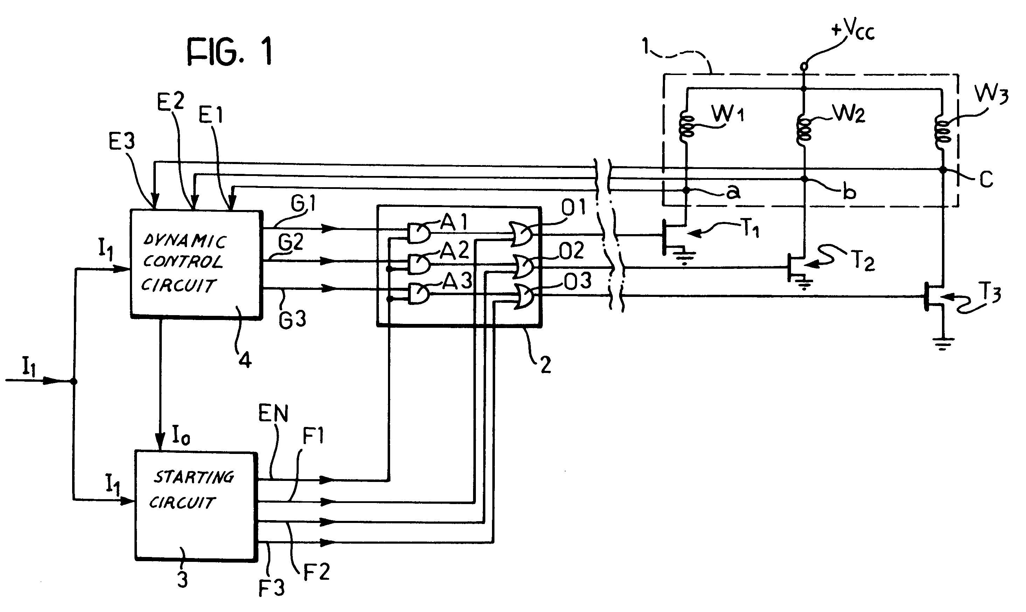

In Figure 1, the assembly of windings or phases of a three-phase, half-wave, brushless motor is generally indicated 1. These windings, indicated W1, W2 and W3 respectively, are connected in series with the output paths of respective controlled electronic switches T1, T2 and T3, for example MOSFET transistors, between earth and the positive terminal of a direct-current voltage supply V_{cc}.

The control input (the base or gate) of each electronic switch is connected to a respective output of a connecting circuit, generally indicated 2. This circuit has three first inputs connected in sequence to the outputs F1, F2 and F3 of a starting circuit which, as will become clearer from the following description, is intended to control the brushless motor when it is being started from a standstill, until predetermined dynamic conditions are reached.

The connecting circuit 2 has a further three inputs connected in sequence to the outputs G1, G2 and G3 of a dynamic control circuit 4 for controlling the brushless motor, in known manner, in the dynamic condition, that is, after it has been started from rest.

The dynamic control circuit 4 has three further inputs E1, E2 and E3 which are connected in sequence to junctions a, b and c between the windings W1, W2 and W3 and the electronic switches T1, T2 and T3.

The brushless motor in question is of the type which does not have sensors for detecting the relative angular position of its rotor and the dynamic control circuit 4 is of the (known) type which controls the brushless motor in the dynamic condition, obtaining data relating to the relative angular position of the rotor by analysing the electromotive forces developed in the phases W1, W2 and W3 in operation and detected at the junctions a, b and c.

The starting circuit 3 and the dynamic control circuit 4 have respective inputs to which a signal I₁ is applied in operation to start the motor and indicate the desired speed or torque.

As will become clearer from the following, when the signal I₁ starts the brushless motor, the dynamic control circuit cannot supply signals at its outputs G1, G2 and G3 for the correct piloting of the switches T1, T2 and T3 since, when the motor is stationary, there are no electromotive forces in the windings of phases W1, W2 and W3. During starting, the signal I₁ thus brings into operation the starting circuit which, as will be seen, outputs signals at its outputs F1, F2 and F3 to start the brushless motor. These signals reach the switches T1, T2 and T3 through connecting circuits 2 which, at this stage, do not allow the signals at the outputs G1, G2 and G3 of the dynamic control circuit 4 to reach the switches.

In the simplified embodiment shown, the connecting circuit 2 includes three AND gates A1, A2 and A3 each having one input connected to a respective output G1, G2 or G3 of the circuit 4 and a respective second input connected to an enabling output EN of the starting circuit 3. The outputs of the gates A1, A2 and A3 are connected in sequence to first inputs of three OR gates, indicated O1, O2 and O3, having respective second inputs connected in sequence to the outputs F1, F2 and F3 of the starting circuit 3.

When the enabling output EN of the starting circuit 3 is at a level "O", the gates A1, A2 and A3 are blocked and prevent the signals output by the dynamic control circuit 4 from reaching the electronic switches T1, T2 and T3. In this condition, however, the signals supplied by the starting circuit 3 at its outputs F1, F2 and F3 can reach the control inputs of the switches.

When the enabling output EN of the starting circuit 3 is at a level "1", the gates A1, A2 and A3 transfer the signals output by the dynamic control circuit to the gates O1, O2 and O3 and hence to the control inputs of T1, T2 and T3. In this situation, which occurs when the brushless motor is controlled by the dynamic control circuit 4 at its running speed, the starting circuit 3 is permanently locked in a condition in which the enabling signal EN is at the level "1" and the outputs F1, F2 and F3 are at the level "0" as a result of a signal I₀ transmitted to them by the dynamic control circuit 4.

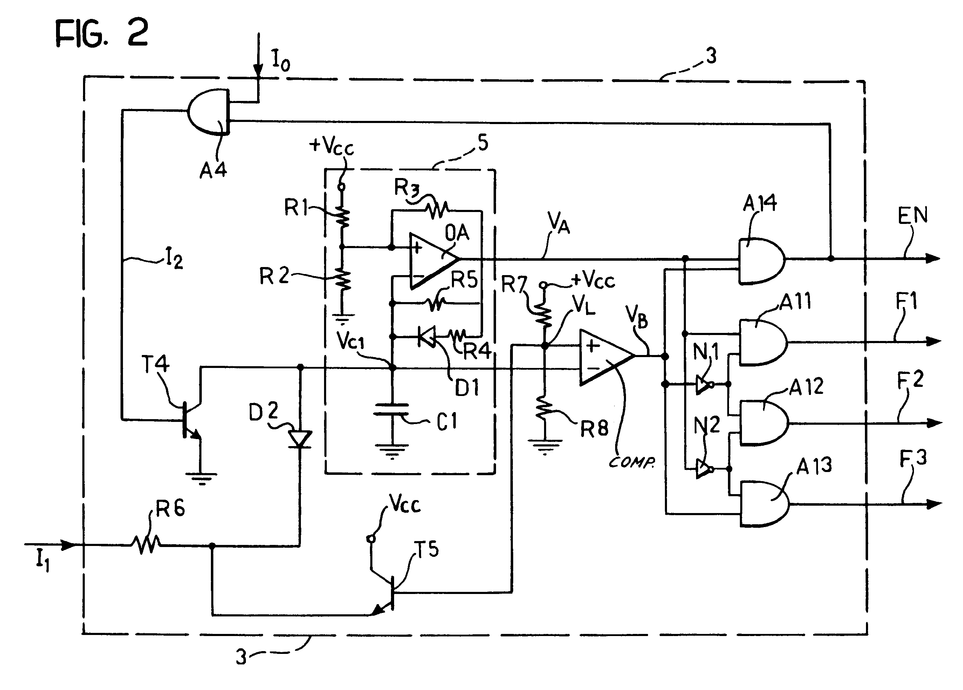

With reference to Figure 2, the starting circuit 3 includes an astable multivibrator, generally indicated 5. In known manner, the multivibrator includes an operational amplifier OA, a capacitor C1 connected between the inverting input of the amplifier and earth, five resistors R1-R5 and a diode D1, connected as shown in Figure 2. In operation, the voltage V_{c1} oscillates between two levels which depend on the resistances of the resistors R1, R2 and R3, at a frequency which depends on the resistances of R4 and R5 and on the capacitance of the capacitor C1.

The diode D1 enables the "on" and "off" periods of the square wave output by the multivibrator 5 to be made unequal.

The anode of a diode D2 is connected to the non-earthed terminal of the capacitor C1 and its cathode is connected to a terminal of a resistor R6, to the other terminal of which the input signal I₁ is applied in operation.

The collector of a transistor T4 is connected to the anode of D2, its emitter is connected to earth and its base is connected to the output of an AND gate A4. In operation, the signal I₀ is applied to an input of this gate by the dynamic control circuit 4.

The non-earthed terminal of the capacitor C1 is connected to the inverting input of a comparator COMP. The non-inverting input of the comparator is connected to the junction between two resistors R7 and R8 arranged between the direct-current voltage supply V_{cc} and earth so as to constitute a voltage divider. The output of the comparator COMP is connected to first inputs of two AND gates A13 and A14 and, through an inverter N1, to the inputs of another two AND gates A11 and A12.

The output of the astable multivibrator 5 is connected to the second inputs of the gates A11 and A14 and, through an inverter N2, to the second inputs of the gates A12 and A13.

The output of the gate A14 is connected to the second input of the gate A4 and constitutes the enabling output EN of the starting circuit 3.

The outputs F1, F2 and F3 of the starting circuit 3 are constituted by the outputs of the gates A11, A12 and A13.

The non-inverting input of the comparator COMP is connected to the base of a transistor T5 whose emitter-collector path is connected between the direct-current voltage supply V_{cc} and the cathode of the diode D2.

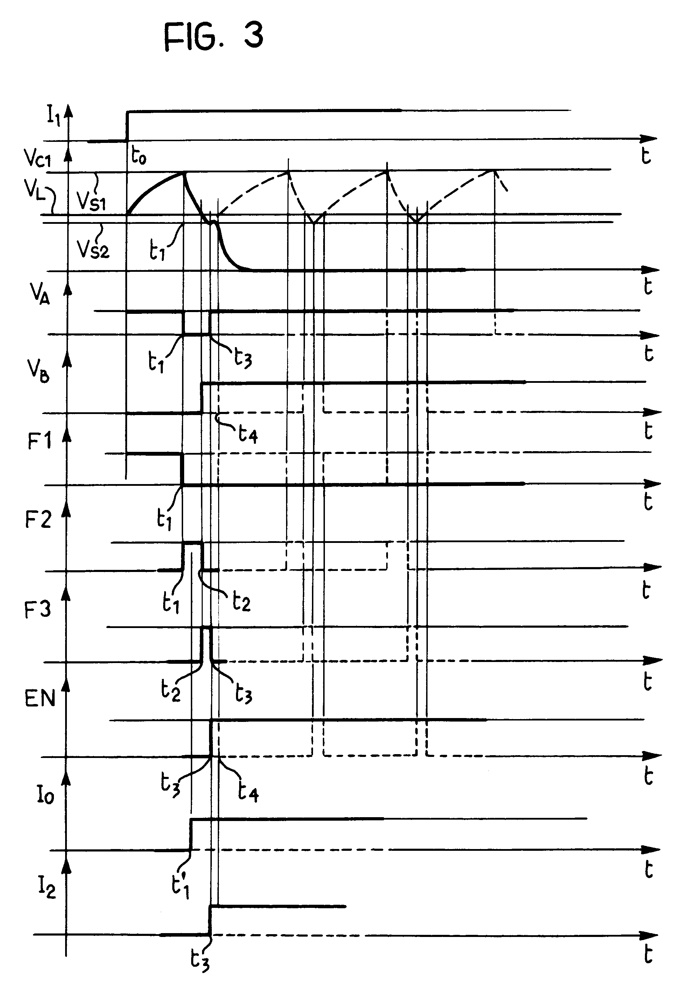

Figure 3 shows the curves of some signals generated by the control circuit described above. In particular, the curves of the signals I₀, I₁, I₂ (the output signal of the gate A4 of Figure 2), V_{C1}, V_{A} (the output of the astable multivibrator 5), V_{B} (the output of the comparator COMP), F1, F2, F3 and EN are shown by way of example.

The operation of the control circuit for brushless motors described above will now be described with reference to the graphs of Figure 3.

It is assumed that, initially, the brushless motor is stationary. In this situation, the signals I₁ and I₀ are both at the level "0".

In order to start the brushless motor, the signal I₁ changes to the level "1" at a time t₀. The astable multivibrator 5 is started and the voltage V_{c1} in the capacitor C1 increases exponentially from a value substantially corresponding to the voltage threshold V_{L} defined by the voltage divider R7-R8, and starts to oscillate between two extreme values Vₛ₁ and Vₛ₂ (Vₛ₂ being less than V_{L}) which are defined by the resistances of the resistors R1, R2 and R3. Correspondingly, the output signal V_{A} of the multivibrator 5 is at the level "1" when V_{c1} is increasing and at the level "0" when that voltage is decreasing.

The comparator COMP compares the voltage V_{c1} with V_{L}, its output correspondingly assuming the level "1" when V_{c1} is less than V_{L}.

The gates A11-A14 combine the logic signals V_{A} and V_{B} in a manner such that:
- starting from the time t₀, the output F1 is at the level "1" until the output of the multivibrator 5 returns to the level "0" at the time t₁; F1 remains at the level "0" as long as V_{B} remains at the level "1";
- F2 is brought to the level "1" at the time t₁ and then returns to the level "0" at the time t₂ when V_{B} changes to the level "1";
- the output F3 changes to the level "1" at the time t₂ when V_{B} changes to the level "1" and then returns to the level "0" at the time t₃ when V_{A} is brought to the level "1", and
- the output EN changes to the level "1" at the time t₃ and tends to return to the level "0" at the time t₄.

As can be seen from the graphs of Figure 3, starting from the time t₀, the outputs F1, F2, F3 and EN of the starting circuit 3 change to the level "1" sequentially and their respective active phases (that is, the periods when they remain at level "1") do not overlap, their durations being determined by the resistances of the resistors R1-R5, R7 and R8.

The active phases of F1, F2 and F3 conveniently have decreasing durations, as shown qualitatively in Figure 3, to take account of the fact that, during start-up, the brushless motor is accelerating.

The starting circuit 3 outputs the first pulse of the enabling signal EN after the pulses (the active phases) of F1, F2 and F3 at the time t₃. If the brushless motor has started during the interval t₀ to t₃, the dynamic control circuit 4 can take over from the starting circuit and pilot the switches T1, T2 and T3 on the basis of the electromotive forces developed in the phases W1, W2 and W3. If this actually takes place, for example, at the time t′₁ in Figure 3, the dynamic control circuit applies a level "1" signal I₀ to the starting circuit 3 at that time. This signal has the effect of forcing the output I₂ of the AND gate A4 of the starting circuit to the level "1" when the output EN is brought to the level "1" at the time t₃.

If the motor has started during the interval between the times t₀ and t₃, therefore, the transistor T4 of the starting circuit 3 becomes conductive and short-circuits the capacitor C1 to earth at the time t₃. The voltage V_{c1} across the capacitor thus falls rapidly to 0. The outputs V_{A} and V_{B} of the multivibrator 5 of the comparator COMP then remain permanently at the level "1", as shown in continuous outline in the graphs of Figure 3. When the brushless motor has started, the output EN of the starting circuit consequently remains at the level "1" whilst the outputs F1, F2 and F3 are locked permanently at the level "0". In this situation, the connecting circuit 2 connects the control inputs of the electronic switches T1, T2 and T3 to the corresponding outputs of the dynamic control circuit 4 which pilots the switches in a predetermined manner in dependence on the electromotive forces detected in the phases of the motor.

If the brushless motor has not started during the interval between t₀ and t₃, however, the signals I₀ and I₂ remain at the level "0" at the time t₄ (the end of the first pulse of the enabling signal EN) and a further series of non-overlapping pulses, each having the same duration as the pulse previously produced at the same output, is produced at the outputs F1, F2, F3 and EN of the starting circuit. This is shown by broken lines in the graphs of Figure 3. The new sequence of pulses at the outputs F1, F2 and F3 is intended as a further attempt to start the brushless motor. If the motor starts during this new sequence of pulses, the dynamic control circuit 4 prevents the starting circuit as described above with reference to the time t′₁.

Naturally, the principle of the invention remaining the same, the forms of embodiment and details of construction may be varied widely with respect to those described and illustrated purely by way of non-limiting example, without thereby departing from the scope of the present invention as defined in the following claims.

## Claims

1. A control circuit for a brushless electric motor with n phases, in which a respective controlled electronic switch (T1, T2, T3) is associated with each phase (W1, W2, W3), the control circuit including:
a starting circuit (3) for controlling the starting of the motor, when it receives a first control signal indicating that the motor is to be started (I₁), by piloting the electronic switches (T1, T2, T3) in a predetermined manner until it receives a second control signal (I₀),
a dynamic control circuit (4) connected to the phases (W1, W2, W3) of the motor for:
- detecting the electromotive forces developed in the phases (W1, W2, W3),
- producing the second control signal (I₀) when the motor has started under the control of the starting circuit (3), and
- then piloting the electronic switches (T1, T2, T3) in dependence on an input signal indicating the desired torque (I₁), and on the electromotive forces developed in the phases connecting circuitry (2) for connecting the control inputs of the electronic switches (T1, T2, T3) to the outputs (F1, F2, F3) of the starting circuit (3) during the starting stage and then, once the motor has started, to the outputs (G1, G2, G3) of the dynamic control circuit (4) when an enabling signal (EN) is received,
the control circuit being characterised in that the starting circuit (3) includes:
a periodic-signal generator (3) with n outputs (F1, F2, F3) for connection in sequence to the control inputs of the electronic switches (T1, T2, T3) associated with the n phases (W1, W2, W3) of the motor and a further output (EN) connected to the connecting circuitry (2),
the generator (3) being arranged to provide:
- at its n outputs (F1, F2, F3), n periodic control signals with the same frequency but with predetermined active periods which are shifted in phase sequentially and do not overlap, for piloting the electronic switches (T1, T2, T3) in sequence, and
- at its further output (EN), a periodic enabling signal with the same frequency as the periodic control signals and an active phase or period which does not overlap those of the periodic control signals,
- locking circuitry (A4, T4; A11-A13) being associated with the generator (3) for preventing the output of the periodic control signals (F1, F2, F3) and locking the enabling signal (EN) at the further output permanently in its active phase when the starting circuit (3) receives the second control signal (I₀).

2. A control circuit according to Claim 1, characterised in that the circuit (3) for generating periodic signals includes:
- a square-wave oscillator (5),
- a phase-shifting circuit (COMP, R7, R8) connected to the oscillator (5) and adapted to output a signal (V_{B}) with the same frequency as the signal (V_{A}) of the oscillator (5) but shifted in phase relative thereto, and
- a logic circuit (A11-A14; N1, N2) which has n+1 outputs (EN; F1, F2, F3) and is adapted to combine the outputs (V_{A} and V_{B}) of the oscillator (5) and the phase-shifting circuit (COMP; R7, R8) so as to output n+1 signals having the same frequency and having predetermined active periods which are shifted in phase sequentially and do not overlap.

3. A control circuit according to Claim 2, characterised in that the oscillator includes an astable multivibrator (5) including an operational amplifier with feedback (OA; R1-R5, D1) and a capacitor (C1) connected between the inverting input of the amplifier and earth, and in that the phase-shifting circuit includes a threshold comparison circuit (COMP; R7, R8) which is arranged to compare the voltage across the capacitor (C1) with a predetermined voltage threshold (V_{L}).

4. A control circuit according to Claim 2, characterised in that the logic circuit includes n+1 AND logic gates (A11-A14).

5. A control circuit according to Claims 1 and 2, characterised in that the locking circuitry includes a circuit (A4; T4) which is adapted to switch off the oscillator (5) as a result of the output of the second control signal (I₀).

6. A control circuit according to Claims 3 and 5, characterised in that the circuit for switching off the oscillator (5) includes a transistor (T4) with its collector-emitter path in parallel with the capacitor (C1).

## Patentansprüche

1. Regelkreis für einen bürstenlosen elektrischen Motor mit n-Phasen, bei dem jeweils ein gesteuerter elektronischer Schalter (T1, T2, T3) jeder Phase (W1, W2, W3) zugeordnet ist, wobei der Regelkreis folgendes aufweist:
einen Anlasserkreis (3) zum Steuern des Anlassens des Motors bei Empfang eines ersten Steuersignals (I₁), welches angibt, daß der Motor angelassen werden soll, indem die elektronischen Schalter (T1, T2, T3) auf vorbestimmte Art und Weise gesteuert werden, bis er ein zweites Steuersignal (I₀) empfängt,
einen dynamischen Regelkreis (4), der mit den Phasen (W1, W2, W3) des Motors verbunden ist zum:
- Feststellen der elektromotorischen Kräfte, die in den Phasen (W1, W2, W3) entwickelt werden,
- Erzeugen des zweiten Steuersignals (I₀), wenn der Motor unter der Steuerung des Anlasserkreises (3) angelassen worden ist, und
- anschließendes Steuern der elektronischen Schalter (T1, T2, T3) in Abhängigkeit von einem Eingangssignal (I₁), welches das gewünschte Drehmoment angibt, und von den in den Phasen entwickelten elektromotorischen Kräften, und
einen Verbindungsschaltungsaufbau (2) zum Verbinden der Steuereingänge der elektronischen Schalter (T1, T2, T3) mit den Ausgängen (F1, F2, F3) der Anlasserschaltung (3) während der Anlaßphase und dann, wenn der Motor angelassen ist, mit den Ausgängen (G1, G2, G3) des dynamischen Regelkreises (4) bei Empfang eines Freigabesignals (EN),
wobei der Regelkreis dadurch gekennzeichnet ist, daß der Anlasserkreis (3) folgendes enthält:
einen Generator (3) zur Erzeugung eines periodischen Signals mit n-Ausgängen (F1, F2, F3) zum sequentiellen Anlegen an die Steuereingänge der elektronischen Schalter (T1, T2, T3), die den n-Phasen (W1, W2, W3) des Motors zugeordnet sind, und einem weiteren Ausgang (EN), der an den Verbindungsschaltungsaufbau (2) angeschlossen ist,
wobei der Generator (3) so ausgelegt ist, daß er:
- an seinen n-Ausgängen (F1, F2, F3) n periodische Steuersignale mit gleicher Frequenz, aber vorbestimmten aktiven Perioden bereitstellt, die sequentiell phasenverschoben sind und sich nicht überschneiden, zum sequentiellen Steuern der elektronischen Schalter (T1, T2, T3), und
- an seinem weiteren Ausgang (EN) ein periodisches Freigabesignal bereitstellt, das dieselbe Frequenz hat wie die periodischen Steuersignale und eine aktive Phase oder Periode, die sich nicht mit denjenigen der periodischen Steuersignale überschneidet,
- einen Sperrschaltungsaufbau (A4, T4; A11-A13) bereitstellt, der dem Generator (3) zugeordnet ist, um die Ausgabe der periodischen Steuersignale (F1, F2, F3) zu verhindern und das Freigabesignal (EN) am weiteren Ausgang dauerhaft in seiner aktiven Phase zu sperren, wenn der Anlasserkreis (3) das zweite Steuersignal (I₀) empfängt.

2. Regelkreis nach Anspruch 1, dadurch gekennzeichnet, daß die Schaltung (3) zum Erzeugen periodischer Signale folgendes enthält:
- einen Rechteckwellenoszillator (5),
- eine Phasenverschiebeschaltung (COMP, R7, R8), die mit dem Oszillator (5) verbunden ist und dazu ausgelegt ist, ein Signal (V_{B}) mit derselben Frequenz wie das Signal (V_{A}) des Oszillators (5), aber mit dazu verschobener Phase auszugeben, und
- eine logische Schaltung (A11-A14; N1, N2), die n+1 Ausgänge hat (EN; F1, F2, F3) und dazu ausgelegt ist, die Ausgänge (V_{A} und V_{B}) des Oszillators (5) und der Phasenverschiebeschaltung (COMP; R7, R8) zu kombinieren, um n+1 Signale mit gleicher Frequenz und vorbestimmten aktiven Perioden auszugeben, die sequentiell phasenverschoben sind und sich nicht überschneiden.

3. Regelkreis nach Anspruch 2, dadurch gekennzeichnet, daß der Oszillator einen astabilen Multivibrator (5) enthält, der einen Operationsverstärker mit Rückkopplung (OA; R1-R5, D1) und einen Kondensator (C1) aufweist, welcher zwischen dem invertierenden Eingang des Verstärkers und Masse geschaltet ist, und dadurch, daß die Phasenverschiebeschaltung eine Schwellenvergleichsschaltung (COMP; R7, R8) aufweist, die dazu ausgelegt ist, die Spannung über dem Kondensator (C1) mit einer vorbestimmten Spannungsschwelle (V_{L}) zu vergleichen.

4. Regelkreis nach Anspruch 2, dadurch gekennzeichnet, daß die logische Schaltung n+1 logische UND-Gatter (A11-A14) aufweist.

5. Regelkreis nach den Ansprüchen 1 und 2, dadurch gekennzeichnet, daß der Sperrschaltungsaufbau eine Schaltung (A4; T4) aufweist, die dazu ausgelegt ist, den Oszillator (5) als Ergebnis der Ausgabe des zweiten Steuersignals (I₀) auszuschalten.

6. Regelkreis nach den Ansprüchen 3 und 5, dadurch gekennzeichnet, daß die Schaltung zum Ausschalten des Oszillators (5) einen Transistor (T4) aufweist, bei dem der Kollektor-Emitter-Pfad mit dem Kondensator (C1) parallel geschaltet ist.

## Revendications

1. Circuit de régulation pour un moteur électrique sans balais à n phases, dans lequel un interrupteur électronique commandé respectif (T1, T2, T3) est associé à chaque phase (W1, W2, W3), le circuit de régulation comportant :
un circuit de démarrage (3) pour commander le démarrage du moteur lorsqu'il reçoit un premier signal de commande (I₁) indiquant que le moteur est sur le point de démarrer, en pilotant les interrupteurs électroniques (T1, T2, T3) suivant un mode prédéterminé jusqu'à ce qu'il reçoive un deuxième signal de commande (I₀),
un circuit de régulation dynamique (4) connecté aux phases (W1, W2, W3) du moteur :
- pour détecter les forces électromotrices qui se développent dans les phases (W1, W2, W3),
- pour produire le deuxième signal de commande (I₀) lorsque le moteur a démarré sous la commande du circuit de démarrage (3), et
- pour piloter ensuite les interrupteurs électroniques (T1, T2, T3) en fonction d'un signal d'entrée (I₁) donnant une indication du couple souhaité et des forces électromotrices qui se développent dans la phase,
des circuits de connexion (2) pour connecter les entrées de commande des interrupteurs électroniques (T1, T2, T3) aux sorties (F1, F2, F3) du circuit de démarrage (3) au cours du stade de démarrage, puis ensuite, une fois que le moteur a démarré, aux sorties (G1, G2, G3) du circuit de régulation dynamique (4) lorsqu'un signal de validation (EN) est reçu,
le circuit de régulation étant caractérisé en ce que le circuit de démarrage (3) comporte :
un générateur de signaux périodiques (3) comprenant n sorties (F1, F2, F3) devant être connectées de façon séquentielle aux entrées de commande des interrupteurs électroniques (T1, T2, T3) associés aux n phases (W1, W2, W3) du moteur, et une sortie supplémentaire (EN) reliée aux circuits de connexion (2),
le générateur (3) étant agencé pour fournir :
- sur ses n sorties (F1, F2, F3), n signaux de commande périodiques de même fréquence mais ayant des périodes actives prédéterminées qui sont déphasées de façon séquentielle et qui ne se recouvrent pas, pour piloter les interrupteurs électroniques (T1, T2, T3) de façon séquentielle, et
- sur sa sortie supplémentaire (EN), un signal de validation périodique de même fréquence que les signaux de commande périodiques et une phase ou période active qui ne recouvre pas celle des signaux de commande périodiques,
- des circuits de blocage (A4, T4 ; A11 à A13) étant associés au générateur (3) pour interdire la sortie des signaux de commande périodiques (F1, F2, F3) et pour bloquer de façon permanente le signal de validation (EN) sur la borne supplémentaire dans sa phase active lorsque le circuit de démarrage (3) reçoit le deuxième signal de commande (I₀).

2. Circuit de régulation suivant la revendication 1, caractérisé en ce que le circuit (3) qui produit des signaux périodiques comporte :
- un oscillateur à onde carrée (5),
- un circuit de déphasage (COMP, R7, R8) connecté à l'oscillateur (5) et adapté pour émettre en sortie un signal (V_{B}) de même fréquence que le signal (V_{A}) de l'oscillateur (5) mais déphasé par rapport à celui-ci, et
- un circuit logique (A11 à A14 ; N1, N2) qui comporte n+1 sorties (EN ; F1, F2, F3) et qui est adapté pour combiner les signaux de sortie (V_{A} et V_{B}) de l'oscillateur (5) et le circuit de déphasage (COMP ; R7, R8) de manière à émettre en sortie n+1 signaux de même fréquence et ayant des périodes actives prédéterminées qui sont déphasées de façon séquentielle et qui ne se chevauchent pas.

3. Circuit de régulation suivant la revendication 2, caractérisé en ce que l'oscillateur comporte un multivibrateur astable (5) comprenant un amplificateur opérationnel à réaction (OA ; R1 à R5, D1) et un condensateur (C1) connecté entre l'entrée inverseuse de l'amplificateur et la masse et en ce que le circuit de déphasage comporte un circuit de comparaison de seuil (COMP ; R7, R8) qui est agencé pour comparer la tension aux bornes du condensateur (C1) à une tension de seuil (V_{L}) prédéterminée.

4. Circuit de régulation selon la revendication 2, caractérisé en ce que le circuit logique comporte n+1 portes logiques ET (A11 à A14).

5. Circuit de régulation selon les revendications 1 et 2, caractérisé en ce que les circuits de blocage comportent un circuit (A4 ; T4) adapté pour interrompre l'oscillateur (5) du fait de la sortie du deuxième signal de commande (I₀).

6. Circuit de commande selon les revendications 3 et 5, caractérisé en ce que le circuit d'interruption de l'oscillateur (5) comporte un transistor (T4) dont le trajet collecteur-émetteur est parallèle au condensateur (C1).
